# EUROPEAN PATENT APPLICATION

(11) **EP 0 889 347 A1**
(43) Date of publication of application: **07.01.1999**
(21) Application number: 98111946.4
(22) Date of filing: 29.06.1998
(51) Int. Cl.: G02C 5/22

(54) **Improvement in a hinge structure in particular for spectacles**

(30) Priority: 04.07.1997 IT TV970034 U; 13.10.1997 IT BL970017
(71) Applicant: Italiana Aste S.r.l., 32030 Quero (Belluno) (IT)
(72) Inventor: Bolzonello, Aldo, 32030 Quero (Belluno) (IT)
(74) Representative: Busca, Luciano

(57) **Abstract**

Elastic hinge structure for spectacle bars, capable of enabling said bars to be diverted into an extra-wide opening position, and comprising a bar associated to a first member provided with an axial seat for a spring and a sphere, in which there is provided a second member which is integral with the structure of the spectacles, wherein an end portion of such a second member is oriented towards said first member and has a cam-like contour.

Said members have respective mutually facing surfaces that are separated from each other when the bar is in a normally opened position and are on the contrary adapted to fittingly join by abutting against each other when said bar is brought into its position of widest possible divarication.

The first member is provided, at its end portion facing said second member, two mutually opposing wings arranged on respective outer edges of said first member, wherein said two wings are provided with two appropriate openings adapted to accomodate a pin acting as the fulcrum for sad cam contour protruding from said second member, said sphere being adapted to engage the recesses in said cam.

## Description

The present invention refers to an improved hinge structure, in particular for spectacles.

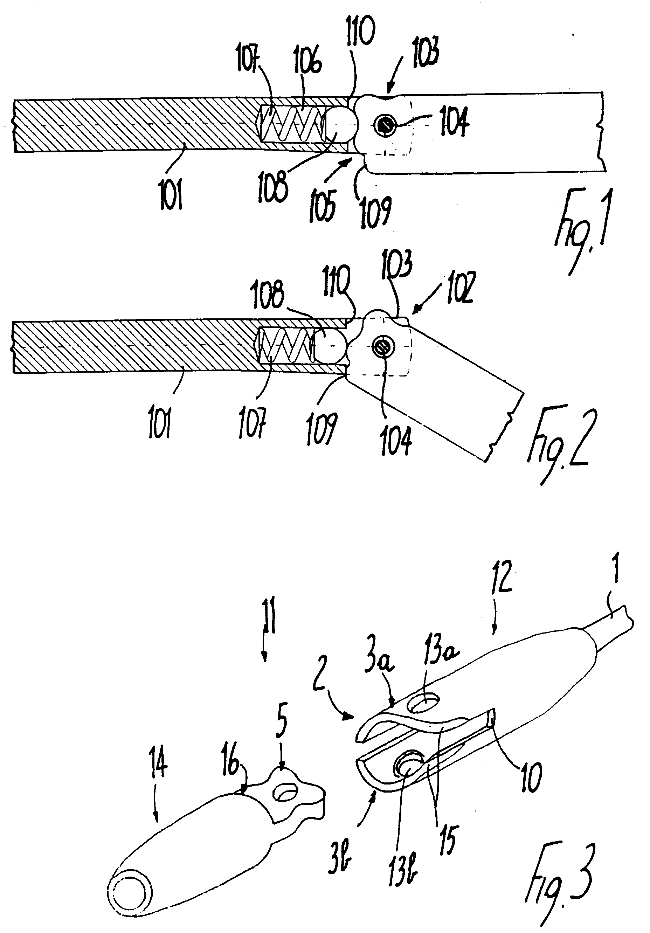

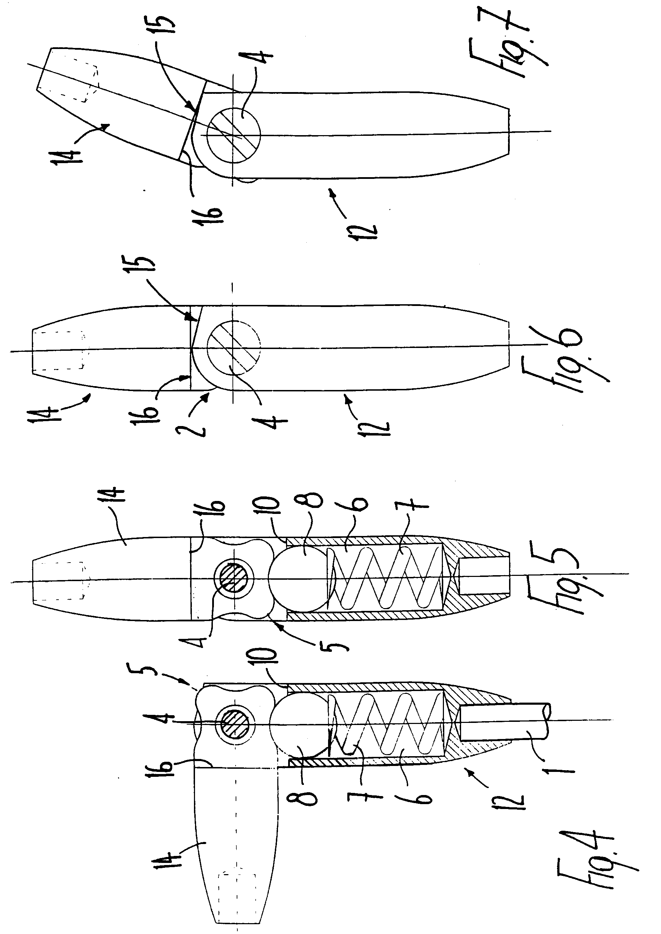

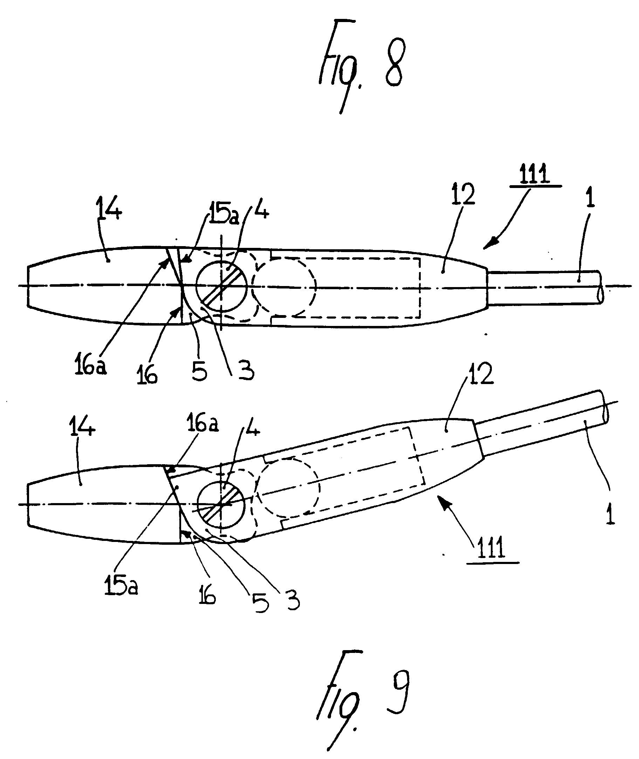

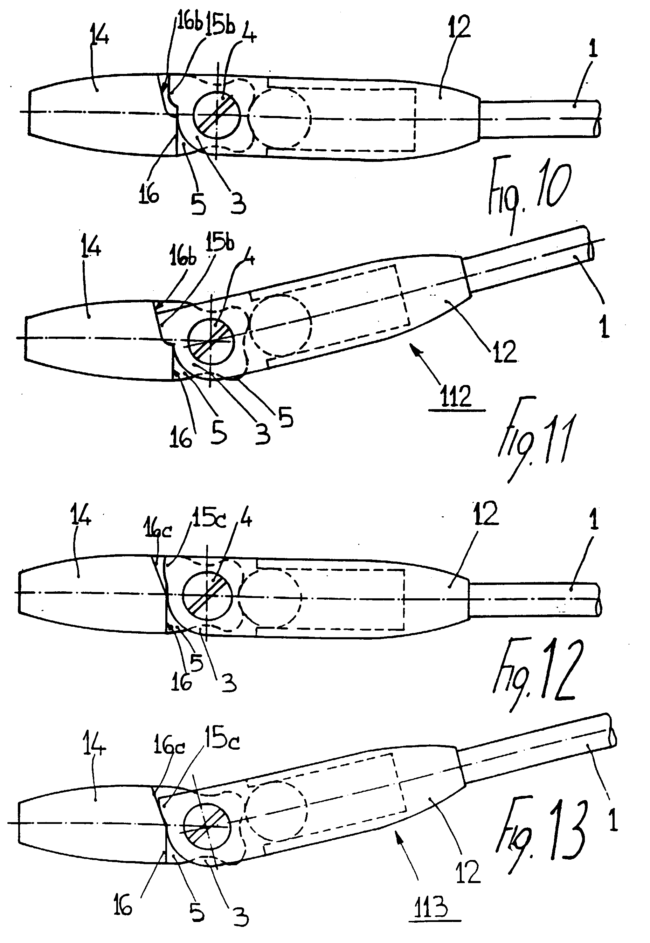

Today, it is a largely known practice to manufacture spectacles and similar products of the type illustrated in Figures 1 and 2, which are basically constituted by a bar 101 having a cylindrical conformation, the terminal portion 102 of which can be noticed to be hollowed out diametrically so as to define a pair of wings 103, openings being provided transversally with respect to such wings, and along the same axis thereof, to accomodate a screw 104 acting as the fulcrum of a cam 105 obtained at the end portion of a member adapted to be associated, for instance, to the frontlet or forepart of the structure of the spectacles.

The cam 105 has such a conformation as to enable it, once it is associated to the wings 103, to stand in front of a seat 106 that is provided axially with respect to said bar 101, wherein a spring 107 and a sphere 108, which interacts directly with the cam 105, are arranged in that seat.

The particular conformation of the cam enables the bar 101 to be arranged and set into stable positions, such as the ones in which it is opened and closed with respect to the forepiece of the spectacle structure. An additional opening of said bar is furthermore enabled, whose width is limited by the presence, on the cam 105, of a protrusion 109 adapted to abut, when moving beyond a given angular position, against the peripheral edge 110 circumscribing the terminal end portion of the seat 106.

Such a particular conformation is however connected with some drawbacks. In fact, said interaction of the protrusion 109 in correspondence of said peripheral edge 110 may cause the latter to undergo a deformation that would practically make the actual function of the sphere ineffective.

This has led the various manufacturers to adpt solutions consisting in using, for the bar 101, and in particular in correspondence of the portion thereof in which the seat 106 is usually provided, such larger diameters as to be able to limit the possibility for the peripheral edge 110 to suffer deformations.

This has again led to the need for definitely bulkier hinges to be used, to the detriment of the overall easthetical merits of the spectacles.

Furthermore, such a prior-art solution has an additional drawback in that, while a limit is in fact provided as far as said additional opening is concerned, said limit may however be anyway forced, even unintentionally, by the user, thereby adding to the problem of the peripheral edge 110 undergoing deformation.

It therefore is a main purpose of the present invention to solve the above cited technical problem by eliminating all of the afore mentioned drawbacks connected with prior-art solutions and at the same time providing a hinge that enables said additional opening position to be reached while preventing the portions of the component part in correspondence of which the seat for the spring and the sphere is provided from undergoing any deformation.

Within the above cited scope , a further important purpose of the present invention is to provide a hinge that enables a well-defined limit for the additional opening of the bar to be provided.

A further important purpose of the present invention is to provide a hinge that, further to the above cited features and characteristics, has the merit of making it possible for component parts to be used which have reduced diameters and thicknesses, in particular in coprrespondence of the portion in which the seat for the spring and the sphere is provided.

Another quite important purpose of the present invention is to provide a hinge which is simple structurally and capable of being manufactured using readily available machines and tools.

Finally, a further purpose of the present invention is to enable production to be diversified by manufacturing hinge elements with aesthetically diversified surface outlook, for instance for different customers, although unvariably working according to the same and single principle.

According to the present invention, the above cited aims are reached, along with further ones that will more clearly emerge from the description given below, in an improved hinge structure, in particular for spectacles, comprising a bar associated to a first member provided with an axial seat adapted to accomodate a spring and a sphere, wherein a cam protruding from a second member adapted to be associated to a frontlet or forepiece of said structure has its fulcrum at one end portion of said first member, said structure being essentially characterized in that said first member is provided, at such end portion thereof, with an inclined peripheral surface interacting with said second member by abutting against it when the bar is brought into said additional opening position.

Further features and advantages of the present invention will be more clearly and readily understood from the description of particular embodiments thereof that is given in greater detail below by way of non-limiting example with reference to the accompanying drawings, in which:
- Figures 1 and 2 are partially sectional views of an example of hinge structure according to the prior art;
- Figure 3 is a perspective view of a hinge structure according to the present invention;
- Figures 4 and 5 are partially sectional views of the hinge structure according to the present invention in the conditions in which the bar is folded, ie. closed, and opened, respectively;
- Figure 6 is a top view of the structure in the condition of opened bar;
- Figure 7 is a top view of the structure in the condition of extra opening , or widest possible divarication of the bar;
- Figure 8 is a plan view of a first constructional variant of the hinge structure according to the present invention, which is shown here with its bar in the position of normal opening;
- Figure 9 is a plan view of the same embodiment of the present invention as illustrated in Figure 8, which is shown here with its bar in the position of widest possible divarication;
- Figure 10 is a plan view of a second constructional variant of the hinge structure according to the present invention, which is shown here with its bar in the position of normal opening;
- Figure 11 is a plan view of the same embodiment of the present invention as illustrated in Figure 10, which is shown here with its bar in the position of widest possible divarication;
- Figure 12 is a plan view of a third constructional variant of the hinge structure according to the present invention, which is shown here with its bar in the position of normal opening;
- Figure 13 is a plan view of the same embodiment of the present invention as illustrated in Figure 12, which is shown here with its bar in the position of widest possible divarication.

With reference to the above listed Figures, it can be noticed that the numeral 11 is used to generally indicate a hinge structure, in particular for spectacles, comprising a bar, which is generally indicated at 1, associated to a first member 12 that has an essentially cylindrical conformation. The terminal end portion 2 of said first member 12 is milled to a shape defining a pair of wings 3a, 3b that are similar to each other and extend parallelly with respect to each other. In correspondence of said wings there are provided pre-arranged openings 13a, 13b adapted to accomodate a screw 4 acting as the fulcrum of a cam 5 protruding from a second member 14.

The first member 12 is provided with a seat 6 to accomodate a spring 7 adapted to be compressed by a sphere 8 which, when in use, comes to partially protrude beyond the peripheral edge 10 contiguous to the open end portion of the seat 6.

The peculiarity of this hinge structure lies essentially in the fact that said first member 12 is provided, at said terminal end portion 2 thereof and in the direction followed to complete said extra opening of the bar, with an inclined peripheral surface 15.

Such an inclined peripheral surface 15 is adapted to interact, by abutting against it in the phase of said extra opening of the bar as illustrated in Fig. 7, with a plane surface 16 provided on said second member 14 perpendicularly to the axis thereof passing through the centre of the cam 5.

The present invention, as described in the above illustrated example of embodiment, allows for a number of improving variants, some of which are shortly illustrated below.

With reference to Figures 8 and 9, according to a first constructional variant of the present invention the possibility is given to further strengthen the concerned hinge structure, which is now generally indicated at 111, by providing on the mutually facing portions of the wings 3a and 3b at least a portion of a surface 15a that is approximately orthogonal to the same member 12.

Such a solution calls necessarily for the provision of a bevel or inclined surface 16a on the external portion of the shoulder of the member 14 facing towards said member 12.

The size and the shape of the described parts are such that, when the bar is forced into said position of widest possible opening shown in Figure 10, said two surfaces 15a and 16a come into plane contact with each other, so that the mutually exterted force, due to its being distributed on a plane surface, generates just a very limited pressure that is fully sustainable by said surfaces. Furthermore, the angle selected for said surfaces will determine the widest possible angle of divarication of the bar.

An improvement in the strength of the wings 3a and 3b, and therefore of the whole hinge 111, is additionally obtained with such a new solution, along with the possibility of obtaining different aesthetical configurations, as they may be defined by the individual manufacturers in view of differentiating their own products from those of other manufacturers, in accordance with the afore cited purposes and within the scope of the present invention.

With reference to Figures 10 and 11, the fact is stressed that the mutually contacting surfaces 15b and 16b of the hinge indicated here generally at 112, although similar to the formerly described hinge 111, show a similar curved profile defining the two members 14 and 12, which are concave and convex, respectively, but capable of making a perfect fit together. Such a circumstance is effective in further increasing the contact surface when the bar is brought into its position of widest possible divarication, thereby ensuring a still greater distribution of the stresses or shocks imparted by said divarication of the bar 1. This of course is also instrumental in further enhancing the strength and durability characteristics of such a type of hinge with respect to prior-art designs.

With reference to Figures 12 and 13, the fact is particularly stressed that the mutually contacting surfaces 15c and 16c of the therein illustrated hinge may also not be shaped according to a common plane or profile, since the possibility actually exists here for the profile of the surface 15c, which is a part of the first member 12, to have a curved shape, while the shoulder 16c may have an at least partially plane profile, or vice-versa, whereas an adequately large distribution area for the stresses or shocks brought about by the divarication of the bar 1 would anyway be ensured.

Therefore, such particular conformations make it possible to use, for the component part constituting the first member 12, materials that are not necessarily so strong, as well as smaller diameters for the seat 6, without any risk for the user, when forcing the bar into a position of extra opening or widest possible divarication, to cause the peripheral edge 10 to be deformed and, therefore, the spectacles to become practically useless.

Having therefore so assigned the role of establishing the obtainable extra-opening limit to said interaction of the inclined peripheral surface 15 with the plane surface 16, the possibility is created for component parts to be designed with a smaller diameter size, with a resulting aesthetical improvement, while anyway ensuring full operability and reliability of the hinge.

## Claims

1. Elastic hinge structure, in particular for spectacle bars, capable of enabling said bars to be diverted into an extra-wide opening position, and comprising a bar (1) associated to a first member (12) provided with an axial seat (6)accomodating a spring (7) and a sphere (8), **characterized in that** :
- there is provided a second member (14) which is integral with the structure of the spectacles, wherein an end portion of such a second member is oriented towards said first member and has a cam-like contour (5),
- said first member is provided, in its respective end portion facing said second member, with a respective peripheral surface (15), wherein said second member is provided, on its front portion facing said first member, of a respective surface (16), said surfaces being separated from each other when the bar is in a normally opened position and being on the contrary adapted to fittingly join by abutting against each other when said bar is brought into its position of widest possible divarication.

2. Structure according to claim 1, **characterized in that** said first member (12) is provided, at its end portion facing said second member (14), two mutually opposing wings (3a, 3b) arranged on respective outer edges of said first member, wherein said two wings are provided with two appropriate openings adapted to accomodate a pin or a screw (4) acting as the fulcrum for sad cam contour (5) protruding from said second member (14), said sphere being adapted to engage the recesses in said cam (5).

3. Structure according to claim 2, **characterized in that** said end portion with a cam-like contour (5) is adapted to get inserted in the space comprised between said two mutually opposing wings (3a, 3b) and to be held in position with respect to said first member by said pin or screw (4).

4. Structure according to claim 2 or 3, **characterized in that** it only consist of:
- said first member (12) and said second member (14),
- said spring (7),
- said sphere (8), and
- said pin or screw (4).

5. Structure according to any of the preceding claims, **characterized in that** said axial seat (6) of said first member has its bottom, supporting the side of said spring which is opposed to the side that is not engaged by said cam contour (5), integrally closed by said first member so that said spring is supported solely by said first member.

6. Structure according to claim 4 or 5, **characterized in that** said surface (16) on the front portion of said second member (14) facing said first member (12) is provided with a plane portion (16a) which is inclined backwards and is adapted to co-operate with a corresponding plane surface (15a) which is approximately orthogonal to the axis of said first member (12), wherein said plane portion (16a) and said surface (15a) fit against each other on their respective plane areas.

7. Structure according to any of the preceding claims 1 to 5, **characterized in that** said surface (16) on the edge of said second member (14) facing said first member (12) is provided with a curved portion (16b) that is inclined backwards and adapted to co-operate with a corresponding curved surface (15b) situated on the edges of said wings of said first member, wherein said curved portion (16b) and said curved surface (15b) fit against each other on their respective curved areas.

8. Structure according to any of the preceding claims 1 to 5, **characterized in that** said peripheral surface (15) and said surface (16), which are associated to said first and said second member, respectively, exhibit mixed plane and curved contours (15c, 16c) corresponding to each other in their respective contact areas, so that they are capable of fitting against each other along said areas in the extra-wide opening position of said spectacle bars.
